# FASCICULE DE BREVET EUROPEEN

(11) **EP 2 632 797 B1**
(45) Date de publication et mention de la délivrance du brevet: **20.04.2016**
(21) Numéro de dépôt: 11785743.3
(22) Date de dépôt: 24.10.2011
(51) Int. Cl.: B64D 33/02, B64C 3/28, B64D 29/00, B64D 15/12, B29C 70/24, B29C 70/48, F01D 25/02, B29C 70/88

(54) **STRUCTURE DE BORD D'ATTAQUE NOTAMMENT POUR ENTRÉE D'AIR DE NACELLE DE MOTEUR D'AÉRONEF**
VORDERKANTENSTRUKTUR, INSBESONDERE FÜR DEN LUFTEINTRITT EINER FLUGZEUGTRIEBWERKSGONDEL
LEADING EDGE STRUCTURE, IN PARTICULAR FOR AN AIR INLET OF AN AIRCRAFT ENGINE NACELLE

(30) Priorité: 29.10.2010 FR 1058931
(43) Date de publication de la demande: 04.09.2013
(73) Titulaire: Aircelle, 76700 Gonfreville L'Orcher (FR)
(72) Inventeur: BOUILLON, Florent, F-76280 Anglesqueville L'esneval (FR); COAT, Caroline, F-76290 Montivilliers (FR)
(74) Mandataire: Gaillarde, Frédéric F. Ch.
(86) Numéro de dépôt international: PCT/FR2011/052475
(87) Numéro de publication internationale: WO 2012/056155

(56) Documents cités:
- EP-A2- 1 845 018
- DE-A1-102008 063 545
- JP-A- 2010 196 176

## Description

La présente invention se rapporte à une structure de bord d'attaque notamment pour entrée d'air de nacelle de moteur d'aéronef.

Comme cela est connu en soi, une nacelle de moteur d'aéronef forme le carénage de ce moteur et ses fonctions sont multiples : cette nacelle comporte notamment dans sa partie amont une partie appelée couramment « entrée d'air », qui présente une forme générale cylindrique, et dont le rôle est notamment de canaliser l'air extérieur en direction du moteur.

Le document EP1845018 A2 divulgue les caractéristiques du préambule de la revendication 1.

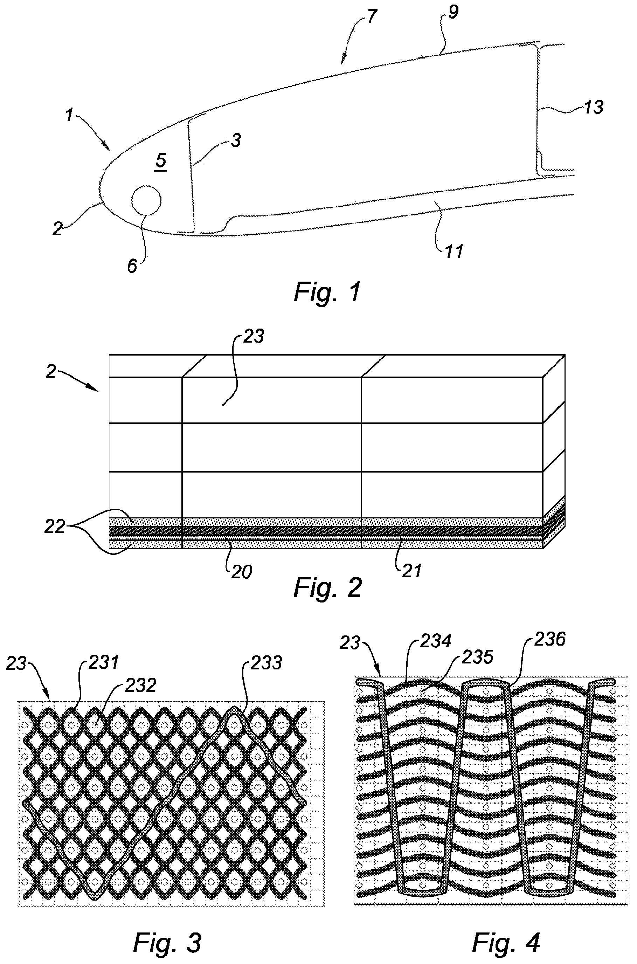

Comme cela est visible sur la figure 1 ci-annexée, où l'on a représenté de manière schématique une section d'une telle entrée d'air en coupe longitudinale, cette partie de nacelle comporte, dans sa zone amont, une structure de bord d'attaque 1 comprenant, d'une part un bord d'attaque 2 à proprement parler couramment appelé « lèvre d'entrée d'air », et d'autre part une première cloison intérieure 3 définissant un compartiment 5 dans lequel sont disposés des moyens 6 de protection contre le givre , à savoir tout moyen permettant d'assurer l'antigivrage et/ou le dégivrage de la lèvre.

La lèvre d'entrée d'air 2 est fixée par rivetage à la partie aval 7 de l'entrée d'air, cette partie aval comportant sur sa face extérieure un capot de protection 9 et sur sa face intérieure des moyens d'absorption acoustique 11 couramment désignés par « virole acoustique » ; cette partie aval 7 de l'entrée d'air définit une sorte de caisson fermé par une deuxième cloison 13.

En règle générale, l'ensemble de ces pièces est formé dans des alliages métalliques, typiquement à base d'aluminium pour la lèvre d'entrée d'air 2 et le capot de protection 9, et à base de titane pour les deux cloisons 3 et 13. Le capot 9 peut également être réalisé en matériau composite.

Une telle entrée d'air classique présente un certain nombre d'inconvénients : son poids est relativement élevé, sa construction nécessite de nombreuses opérations d'assemblage, et la présence de nombreux rivets affecte ses qualités aérodynamiques.

Pour supprimer ces inconvénients, une évolution naturelle est le remplacement des matériaux métalliques par des matériaux composites.

De nombreuses recherches ont été effectuées afin d'utiliser des matériaux composites, en particulier pour la structure de bord d'attaque 1.

Toutefois, ces recherches ont jusqu'alors buté sur le problème du comportement thermique des matériaux composites et aux conséquences sur l'efficacité des systèmes de dégivrage ou d'antigivrage mis en place dans la lèvre d'entrée d'air.

La conduction thermique des matériaux composites est inférieure à celle des matériaux métalliques, et notamment de l'aluminium.

A ce jour, il n'est pas possible de concilier les exigences relatives au dégivrage et/ou à l'antigivrage de la lèvre d'entrée d'air 2 et celles relatives au comportement mécanique de ladite lèvre 2 pour une lèvre réalisée en matériaux composites « classiques ».

En effet, on ne peut atteindre, sur la peau externe de la lèvre, la température nécessaire pour assurer l'antigivrage et/ou pour dégivrer efficacement, sans détériorer thermiquement le matériau composite en dépassant sa température de transition vitreuse en différents points.

La modification des dimensions du matériau composite, et plus particulièrement une réduction de l'épaisseur du matériau composite, ne permet pas de résoudre ce problème.

De plus, une telle modification entraîne, également, une diminution de la résistance de la lèvre d'entrée d'air aux contraintes mécaniques, de type résistance statique et/ou résistance à l'impact d'outils, d'oiseaux ou de grêle.

La présente invention a donc notamment pour but de fournir une solution permettant d'utiliser des matériaux composites pour les structures de bords d'attaques d'aéronef, notamment pour les nacelles, qui ne présente pas les inconvénients de la technique antérieure.

Un but de la présente invention est de proposer une structure de bord d'attaque composite qui offre un antigivrage ou un dégivrage efficace, en particulier dans le cas de moyens de protection contre le givre électriques.

Il est également désirable d'offrir une structure de bord d'attaque qui offre une grande résistance contre les impacts éventuels, tout en continuant d'assurer une fonction de dégivrage et/ou d'antigivrage efficace.

Un autre but de la présente invention est de proposer une structure de bord d'attaque à conduction thermique optimisée dans l'épaisseur de la structure permettant de réduire les différences de température entre les peaux interne et externe du bord d'attaque, d'augmenter l'efficacité thermique du système lèvre - moyens de protection contre le givre, et de réduire le temps de réponse de montée en température.

Il est également avantageux de pouvoir adapter la conduction thermique de la structure de bord d'attaque sur son profil, c'est-à-dire son évolution selon l'axe longitudinal de la nacelle et en radial.

Il est également avantageux de proposer une structure de bord d'attaque de masse réduite.

On atteint ce but de l'invention avec une structure de bord d'attaque, notamment pour entrée d'air de nacelle d'aéronef, comprenant un bord d'attaque et une cloison intérieure définissant un compartiment longitudinal à l'intérieur de ce bord d'attaque logeant des moyens de dégivrage et/ou d'antigivrage, remarquable en ce que ledit bord d'attaque est formé d'au moins une structure composite multiaxiale superposée à un élément chauffant destiné au dégivrage et/ou à l'antigivrage..

Par structure composite multiaxiale, on entend un composite comprenant des fibres dans les trois directions, de l'espace, dont des fibres de renfort la traversant dans son épaisseur, permettant de lier les couches de composites entre elles.

L'utilisation de tels composites multiaxiaux pour former une structure de bord d'attaque confère à celle-ci de bonnes propriétés thermiques de part la présence des fibres de renfort dans l'épaisseur de la structure composite, tout en assurant une excellente résistance vis-à-vis des différents impacts qu'elle peut être amenée à subir.

La présence des fibres de renfort transversales engendre une conductivité thermique évolutive dans l'épaisseur de la structure composite, permettant de pouvoir atteindre une température adéquate pour un dégivrage et/ou un antigivrage efficace sur la peau externe du bord d'attaque tout en maintenant la résine de la structure composite en dessous de sa température de transition vitreuse en tout point et à tous les moments.

La présence des fibres de renfort transversales engendre une amélioration du temps nécessaire à la structure pour atteindre les températures requises au bon fonctionnement du système d'antigivrage ou de dégivrage.

Suivant d'autres caractéristiques optionnelles de la structure de bord d'attaque selon l'invention :
- la structure composite multiaxiale comprend des fibres de renfort en matériau carbone, cuivre ou aluminium ;
- la structure composite multiaxiale est réalisée par un procédé de couture ;
- la structure composite multiaxiale est réalisée par un procédé d'aiguilletage ;
- la structure composite multiaxiale comprend une armature de tissage de type interlock d'angle ;
- la structure composite multiaxiale comprend des fibres de renfort dont l'orientation est inclinée par rapport à la normale au plan de la structure ;
- la structure composite multiaxiale comprend des fibres de renfort agencées de façon parallèle à la normale au plan de la structure ;
- les fibres de renfort traversent complètement ou non l'épaisseur de la structure composite ;
- le bord d'attaque présente une épaisseur variable le long de son profil, et notamment, par exemple, une épaisseur plus importante au niveau de fortes courbures et moins importante au niveau de ses extrémités.
- le bord d'attaque présente une densité de fibres de renfort variable en fonction du besoin thermique.

La présente invention se rapporte également à une entrée d'air, remarquable en ce qu'elle comprend une structure de bord d'attaque conforme à ce qui précède.

La présente invention se rapporte également à une nacelle pour moteur d'aéronef, remarquable en ce qu'elle comprend une entrée d'air conforme à ce qui précède.

D'autres caractéristiques et avantages de la présente invention apparaîtront à la lumière de la description qui va suivre, et à l'examen des figures ci-annexées, dans lesquelles :
- la figure 1 représente de manière schématique une section d'entrée d'air en coupe longitudinale de l'art antérieur (voir préambule de la présente description) ;
- la figure 2 représente une vue en coupe transversale d'une structure de bord d'attaque d'entrée d'air selon un premier mode de réalisation de la présente invention ;
- les figures 3 et 4 sont des schémas, en coupe transversale, de deux modes de réalisation différents d'une structure en matériau composite à armature de tissage de type interlock d'angle de la structure de bord d'attaque de la figure 2.
- la figure 5 est un schéma, en coupe transversale, d'un mode de réalisation d'une structure en matériau composite tuftée de la structure de bord d'attaque de la figure 2.

Sur l'ensemble de ces figures, des références identiques ou analogues désignent des organes ou sous-ensembles d'organes identiques ou analogues.

Une structure de bord d'attaque destinée en particulier à être intégrée à une entrée d'air de nacelle de moteur d'aéronef comprend, classiquement, comme décrit précédemment dans l'art antérieur, un bord d'attaque 2 (visible sur la figure 1) et une cloison longitudinale intérieure définissant un compartiment destiné à accueillir, en particulier, des moyens de protection contre le givre de type moyens de dégivrage et/ ou antigivrage.

En se reportant à la figure 2, on a représenté un mode de réalisation particulier d'un bord d'attaque 2 ou lèvre d'entrée d'air selon l'invention.

Dans une variante de réalisation, ce bord d'attaque 2 peut être structural.

Comme expliqué précédemment, ceci signifie que le bord d'attaque 2 a une fonction de structure, en plus d'une fonction aérodynamique.

Les efforts sont par ailleurs également repris par la cloison intérieure 3, correctement dimensionnée.

Dans une variante de réalisation, le bord d'attaque 2 présente une épaisseur variable le long de son profil, et notamment, par exemple, une épaisseur plus importante au niveau de fortes courbures et moins importante au niveau de ses extrémités.

Par ailleurs, le bord d'attaque 2 est formé d'un empilement de couches particulières.

Dans un premier mode de réalisation illustré sur la figure 2, le bord d'attaque 2 comprend une couche de matériau thermiquement isolant 20 sur laquelle est superposé un tapis de dégivrage formé, dans un exemple non limitatif de la présente invention, d'une âme 21 pris en sandwich entre deux couches de matériau élastomère 22.

L'âme 21 intégrée à la lèvre d'entrée d'air 2 est conçue comme un élément chauffant destiné à assurer la conduction électrique pour permettre le dégivrage de la lèvre 2 et/ou la protection antigivre de cette dernière.

L'ensemble isolant-tapis chauffant forme la peau externe de la lèvre d'entrée d'air 2.

Il est à noter que les épaisseurs des différentes couches du bord d'attaque 2, illustrées sur la figure 2, ne sont pas nécessairement à l'échelle.

Le bord d'attaque 2 comprend, en outre, une structure composite 23 superposée à l'ensemble formé par le tapis chauffant et l'isolant 20.

Selon les variantes de réalisation du bord d'attaque 2, on prévoit ou non, également, une couche anti érosion superposée à la structure composite 23.

La structure composite 23 et la couche anti-érosion, le cas échéant, forment la peau interne du bord d'attaque 2.

Dans une variante de réalisation, cette structure composite mutliaxiale 23 est une structure monolithique.

Par « monolithique », on entend que les différents plis (c'est-à-dire les couches comprenant chacune des fibres noyées dans de la résine) formant le matériau composite sont acollés les uns aux autres, sans interposition d'âme entre ces plis.

Toutefois, d'autres variantes de réalisation peuvent prévoir des structures composites 23 de type sandwich.

Par structure sandwich, on entend une structure composite composée de deux peaux pouvant être multiaxiales séparées par une âme pouvant être réalisée, dans un exemple non limitatif, à l'aide d'une structure en nid abeille.

Avantageusement, cette structure composite 23 est une structure composite multiaxiale dans les zones sensibles au givre.

Elle peut ainsi être formée par une superposition de plis unidimensionnels (UD) et/ou bidimensionnels (2D) et orientés formant une préforme, reliés entre eux par des fibres de renfort les traversant au moins dans leur épaisseur.

Les plis peuvent être formés, dans des exemples non limitatifs, en matériau carbone époxy ou carbone bismaléimide (BMI).

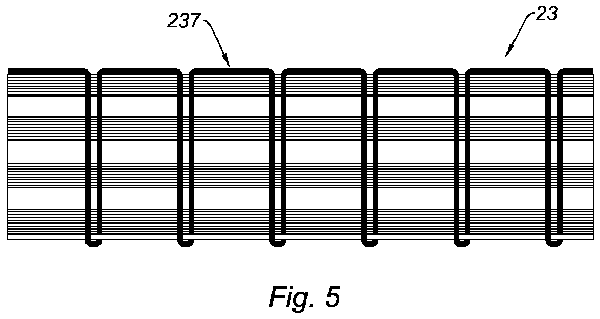

Un procédé de fabrication d'un tel composite monolithique multiaxial peut consister à assembler à sec des couches de fibres sèches formant préforme avec des fibres de renfort dans l'épaisseur pour doper le comportement thermique, par un procédé de couture ou d'aiguilletage. Un exemple de réalisation sera décrit plus loin en relation avec la figure 5.

Dans la variante de réalisation selon un procédé d'aiguilletage, on insert des aiguilles composites pré-polymérisées ou métalliques.

La consolidation de l'ensemble ainsi obtenu est ensuite assurée par injection de résine, selon une technique connue en soi d'infusion ou de RTM (Resin Transfer Moulding en termes anglo-saxons).

Dans une variante de réalisation, on propose des structures composites avec des fibres de renfort dans l'épaisseur pour doper le comportement thermique obtenues par tissage, tressage ou tricotage, comme illustré en référence aux figures 3 et 4.

Par ailleurs, dans un second mode de réalisation non illustré de structure de bord d'attaque 2, on peut prévoir, en outre, une seconde structure composite multiaxiale, cette structure étant intercalée entre le tapis de dégivrage et la couche de matériau thermiquement isolant 20.

Deux variantes de réalisation d'une structure composite 23 multiaxiale sont illustrées sur les figures 3 et 4.

Ces deux variantes ne sont pas limitatives.

Sur la figure 3, on observe une structure composite 23 à armature de tissage de type interlock d'angle et, plus particulièrement, de type interlock d'angle à trois dimensions.

Cette armature est tissée par trois types de fibres, à savoir des fibres 231 dans la direction chaine, des fibres 232 dans la direction trame et des fibres de renfort 233 traversant l'épaisseur de la structure 23.

Ainsi, les premières séries 231 de fibres entrelacées deux à deux s'étendent en direction de la normale au plan de la structure 23 et la seconde série 232 de fibres s'étend dans le plan de la structure 23.

Cette structure 23 étant multiaxiale, elle comprend, en outre, les fibres de renfort 233 qui s'ondulent à travers toutes les couches d'empilement des fibres dans le sens trame. L'orientation des fibres de renfort 233 est inclinée par rapport à la normale au plan de la structure 23.

De préférence, l'angle d'inclinaison est de 30 ° et 60 °.

Sur la figure 4, on observe une structure composite 23 à armature de tissage de type interlock d'angle et, plus particulièrement, de type interlock orthogonal.

Cette armature est tissée par au moins trois types de fibres dont deux types de fibres 234, 235 orientées dans le sens chaîne et trame du tissage, à savoir le plan de la structure 23 et disposées par un empilement ou un entrelacement et des fibres orientées verticalement pour renforcer la direction dans l'épaisseur de la structure 23 passant à travers les deux autres types de fibres 234, 235 pour former un repère cartésien.

Des fibres de renfort 236 sont, par ailleurs, ajoutées. Elles sont agencées sensiblement de façon parallèle à la normale au plan de la structure 23 pour intercepter les fibres dites cartésiennes.

Elles peuvent ainsi former une série de U renversés et juxtaposés.

Une autre variante de réalisation d'une structure composite multiaxiale 23 est proposée en figure 5.

Sur cette figure, on observe une structure composite multiaxiale 23 réalisée par un procédé de couture par touffetage, communément appelé tufting, dans laquelle les fibres de renfort 237ont été tuftées dans l'épaisseur de ladite structure 23.

Selon la variante de réalisation, on peut envisager que les fibres de renfort 233, 236 traversent complètement ou non l'épaisseur de la structure composite 23.

Elles sont, en outre, thermiquement conductrices et peuvent être formées en carbone, cuivre ou aluminium, matériaux que l'on cite à titre d'exemples.

Grâce à la présente invention, on utilise les caractéristiques de conduction thermique des fibres de renfort 233, 236 de la structure composite monolithique, combinée à celles de l'âme chauffante 231, afin de satisfaire aux exigences du dégivrage notamment électrique et/ou de l'antigivrage et de réduire la différence de température entre les peaux interne et externe de la lèvre.

Les fibres de renfort 233, 236 traversent l'épaisseur de la structure composite 23 et forment un réseau d'éléments présentant une conductivité électrique qui va participer à la conduction de la chaleur entre la peau interne et la peau externe de la lèvre 2.

Elles sont ainsi adaptées pour dissiper l'énergie de l'âme chauffante à travers l'épaisseur de la structure composite 23.

Les propriétés thermiques de la structure de bord d'attaque 2 sont significativement renforcées par les propriétés physiques des fibres de renfort 233, 236 dans l'épaisseur de la structure composite 23.

On assure ainsi une conductivité évolutive dans l'épaisseur de la structure composite 23 et une réduction de la différence de température entre la peau externe et la peau interne de la lèvre 2.

Avec une telle structure de bord d'attaque, on obtient la température nécessaire pour assurer un dégivrage et/ou antigivrage sans dépasser localement la température de transition vitreuse de la structure composite 23, tout en restant compatible des épaisseurs nécessaires à la problématique structurale d'une lèvre d'entrée d'air 2.

Une structure de bord d'attaque 2 selon l'invention est ainsi susceptible de résister à des contraintes thermiques élevées tout autant que des contraintes mécaniques élevées.

De plus, elle permet de réduire la masse de la lèvre d'entrée d'air 2.

Il est à noter également que la densité de fibres de renfort 233, 236 est variable en fonction du besoin thermique.

Bien entendu, la présente invention n'est nullement limitée aux modes de réalisation décrits ci-dessus, et toutes autres variantes de structures en matériaux composites multiaxiaux pourraient être envisagées.

## Revendications

1. Structure de bord d'attaque (1) notamment pour entrée d'air de nacelle d'aéronef, comprenant un bord d'attaque (2) et une cloison intérieure (3) définissant un compartiment longitudinal (5) à l'intérieur de ce bord d'attaque (2) logeant des moyens de dégivrage, et/ou d'antigivrage ledit bord d'attaque (2) étant formé d'au moins une structure (23) composite multiaxiale formée par une superposition de plis unidimensionnels et/ou bidimensionnels (2D) et orientés formant une préforme, **caractérisée en ce que** lesdits plis sont reliés entre eux par des fibres de renfort (233, 236) les traversant au moins dans leur épaisseur, et **en ce que** ladite structure (23) composite multiaxale est superposée à un élément chauffant (21) destiné à l'antigivrage et/ou au dégivrage.

2. Structure selon la revendication 1, **caractérisée en ce que** les fibres de renfort (233, 236) de la structure (23) composite multiaxiale sont en matériau carbone, cuivre ou aluminium.

3. Structure selon l'une des revendications 1 ou 2, **caractérisée en ce que** la structure (23) composite multiaxiale comprend une armature de tissage de type interlock d'angle.

4. Structure selon l'une des revendications 1 ou 2, **caractérisée en ce que** l'orientation des fibres de renfort (233, 236) de la structure (23) composite multiaxiale est inclinée par rapport à la normale au plan de la structure (23).

5. Structure selon l'une des revendications 1 ou 2, **caractérisée en ce que** les fibres de renfort (233, 236) de la structure (23) composite multiaxiale sont agencées de façon parallèle à la normale au plan de la structure (23).

6. Structure (1) selon l'une quelconque des revendications 1 à 5, **caractérisée en ce que** le bord d'attaque (2) présente une épaisseur variable le long de son profil, et notamment, par exemple, une épaisseur plus importante au niveau de fortes courbures et moins importante au niveau de ses extrémités.

7. Structure (1) selon l'une quelconque des revendications 2 à 6, **caractérisée en ce que** le bord d'attaque (2) présente une densité de fibres de renfort (233, 236) variable en fonction du besoin thermique.

8. Entrée d'air, **caractérisée en ce qu'**elle comprend une structure de bord d'attaque (1) conforme à l'une quelconque des revendications précédentes.

9. Nacelle pour moteur d'aéronef, **caractérisée en ce qu'**elle comprend une entrée d'air conforme à la revendication 8.

## Patentansprüche

1. Vorderkantenstruktur (1), insbesondere für den Lufteintritt einer Flugzeugtriebwerksgondel, eine Vorderkante (2) und eine Innenwand (3) umfassend, die ein Längsfach (5) innerhalb dieser Vorderkante (2) definieren, in dem Enteisungsmittel und/ oder Frostschutzmittel aufgenommen werden, wobei die besagte Vorderkante (2) aus zumindest einer mehrachsigen Verbundstruktur (23) gebildet wird, die durch eine Überlagerung von eindimensionalen und/oder zweitdimensionalen (2D) und ausgerichteten Schichten gebildet wird, die einen Vor-Formling bilden,
**dadurch gekennzeichnet, dass** die besagten Schichten durch Verstärkungsfasern (233, 236) miteinander verbunden sind, die sie zumindest in ihrer Dicke durchqueren, und dadurch, dass die besagte mehrachsige Verbundstruktur (23) ein Heizelement (21) überlagert, das für den Frostschutz und/ oder für die Enteisung bestimmt ist.

2. Struktur nach Anspruch 1, **dadurch gekennzeichnet, dass** die Verstärkungsfasern (233, 236) der mehrachsigen Verbundstruktur (23) aus Kohlenstoffmaterial, Kupfer oder Aluminium sind.

3. Struktur nach einem der Ansprüche 1 oder 2, **dadurch gekennzeichnet, dass** die mehrachsige Verbundstruktur (23) eine Gewebearmierung in der Art eines Interlock-Stoffes umfasst.

4. Struktur nach einem der Ansprüche 1 oder 2, **dadurch gekennzeichnet, dass** die Ausrichtung der Verstärkungsfasern (233, 236) der mehrachsigen Verbundstruktur (23) im Verhältnis zur Senkrechten zur Ebene der Struktur (23) schräggestellt ist.

5. Struktur nach einem der Ansprüche 1 oder 2, **dadurch gekennzeichnet, dass** die Verstärkungsfasern (233, 236) der mehrachsigen Verbundstruktur (23) parallel zur Senkrechten zur Ebene der Struktur (23) angeordnet sind.

6. Struktur (1) nach irgendeinem der Ansprüche 1 bis 5, **dadurch gekennzeichnet, dass** die Vorderkante (2) entlang ihres Profils eine variable Dicke aufweist, und vor allem beispielsweise eine größere Dicke im Bereich der starken Krümmungen und weniger groß im Bereich ihrer Enden.

7. Struktur (1) nach irgendeinem der Ansprüche 2 bis 6, **dadurch gekennzeichnet, dass** die Vorderkante (2) eine Dichte an Verstärkungsfasern (233, 236) aufweist, die je nach Wärmebedarf variabel ist.

8. Lufteintritt, **dadurch gekennzeichnet, dass** er eine Vorderkantenstruktur (1) nach irgendeinem der vorherigen Ansprüche umfasst.

9. Flugzeugtriebwerksgondel, **dadurch gekennzeichnet, dass** sie einen Lufteintritt nach Anspruch 8 umfasst.

## Claims

1. A leading edge structure (1) in particular for an air inlet of an aircraft nacelle, comprising a leading edge (2) and an inner partition (3) defining a longitudinal compartment (5) inside said leading edge (2) housing deicing and/or anti-icing means, said leading edge (2) being formed from at least one multi-axial composite structure (23) formed by a superposition of one-dimensional and/or two-dimensional (2D) plies and oriented forming a perform,
**characterized in that** said plies are interconnected by reinforcing fibers (233, 236) passing therethrough at least in their thickness, and **in that** said multi-axial composite structure (23) is superimposed on one heating element (21) intended for the anti-icing and/or the deicing.

2. The structure according to claim 1, **characterized in that** the reinforcing fibers (233, 236) of the multi-axial composite structure (23) are made of carbon, copper or aluminum material.

3. The structure according to any of claims 1 or 2, **characterized in that** that the multi-axial composite structure (23) comprises a weaving frame of the angle-interlock type.

4. The structure according to any of claims 1 or 2, **characterized in that** the orientation of the reinforcing fibers (233, 236) of the multi-axial composite structure (23) is inclined relative to the normal to the plane of the structure (23).

5. The structure according to any of claims 1 or 2, **characterized in that** that the reinforcing fibers (233, 236) of the multi-axial composite structure (23) are arranged parallel to the normal to the plane of the structure (23).

6. The structure (1) according to any one of claims 1 to 5, **characterized in that** the leading edge (2) has a variable thickness along its profile, and in particular, for example, a thickness greater at sharp bends and a smaller at its ends.

7. The structure (1) according to any one of claims 2 to 6, **characterized in that** the leading edge (2) has a density of reinforcing fibers (233, 236) which varies according to the thermal need.

8. An air inlet, **characterized in that** it comprises a leading edge structure (1) in accordance with any one of the preceding claims.

9. A nacelle for an aircraft engine, **characterized in that** it comprises an air inlet in accordance with claim 8.
